# EUROPÄISCHE PATENTANMELDUNG

(11) **EP 3 301 797 A1**
(43) Veröffentlichungstag der Anmeldung: **04.04.2018**
(21) Anmeldenummer: 16191738.0
(22) Anmeldetag: 30.09.2016
(51) Int. Cl.: H02K 41/02, B23Q 17/22, H02K 11/21

(54) **LÄUFER EINES LINEARMOTORBASIERTES TRANSPORTSYSTEMS, LINEARMO-TORBASIERTES TRANSPORTSYSTEM UND VERFAHREN**

(71) Anmelder: Siemens Aktiengesellschaft, 80333 München (DE)
(72) Erfinder: Eberlein, Werner, 91054 Erlangen (DE); Spindler, Carsten, 07368 Remptendorf (DE); Hamik, Reinhold, 71334 Waiblingen (DE)

(57) **Zusammenfassung**

Zusammenfassend betrifft die Erfindung einen Läufer (L) für einen Linearmotorbasiertes Transportsystem (LA), ein Verfahren zum Betrieb eines solchen Linearmotorbasiertes Transportsystems (LA) und einen solchen Linearmotorbasiertes Transportsystem (LA) selbst. Weiter betrifft die Erfindung eine Anlage mit einem solchen Linearmotorbasiertes Transportsystem. Gemäß einem Aspekt der Erfindung weist der Läufer (L) ein erstes Erfassungselement (E1) und zumindest ein zweites Erfassungselement (E2) auf, wobei das jeweilige Erfassungselement (E1, E2) zur Erfassung der Position (x) des Läufers (L) ausgebildet ist, wobei das erste Erfassungselement (E1) und das zweite Erfassungselement (E2) beabstandet mit dem Läufer (L) verbunden sind und wobei das erste Erfassungselement (E1) von einem ersten Sensor (S1) des Linearmotorbasiertes Transportsystems (LA) erfassbar ist und/oder das zweite Erfassungselement (E2) von einem zweiten Sensor (S2) des Linearmotorbasiertes Transportsystems (LA) erfassbar ist. Durch den Einsatz eines solchen Läufers (L) in einem Linearmotorbasiertes Transportsystem (LA) entfällt vorzugsweise eine bisher notwendige Überlappung von Sensoren (S1, S2).

## Beschreibung

Die Erfindung betrifft einen Läufer eines Linearmotorbasierten Transportsystems und einen Linearmotorbasiertes Transportsystem. Weiter betrifft die Erfindung ein Verfahren zum Betrieb eines Linearmotorbasierten Transportsystems. Weiter betrifft die Erfindung eine Anlage mit einem Linearmotorbasierten Transportsystem.

Linearmotorbasierte Transportsysteme weisen Läufer auf. Hier wird unter einem Linearmotorbasierten Transportsystem ein Transportsystem verstanden, bei dem die Läufer zumindest bereichsweise mit Hilfe von Linearmotorstatoren, sogenannte Segmente, bewegt werden. Beispielhaft ist ein solches Linearmotorbasiertes Transportsystem das das Multi-Carrier-System der Firmen Siemens und FESTO. Für die Regelung der Position und/oder der Geschwindigkeit der Läufer weisen die Läufer regelmäßig ein Erfassungselement, insbesondere ein Magnetelement, auf. Das Erfassungselement wirkt mit einem Sensor, der einem Segment des Linearmotorbasierten Transportsystems zugeordnet ist, zusammen. Durch das Zusammenwirken des Erfassungselements und des Sensors kann die Position des Läufers auf dem Segment bestimmt werden.

Linearmotorbasierte Transportsysteme weisen oft mehrere Segmente auf, wobei der zumindest eine Läufer über eine Mehrzahl von Segmente hinweg bewegt wird. Beim Übergang des Läufers von einem Segment zu einem weiteren Segment treten gelegentlich Schwierigkeiten auf, welche mit komplexen regelungstechnischen Schaltungen kompensiert werden müssen.

DE 10 2008 008 602 A1 beschreibt einen solchen Linearmotorbasiertes Transportsystem. Ein solcher Linearmotorbasiertes Transportsystem weist einen komplexen mechanischen Aufbau auf, da eine vollständige Abdeckung der Segmente mit den Sensoren notwendig ist. Bisher mussten daher die Sensoren auf beiden Seiten der Segmente angeordnet werden. Das bisher notwendige Überlappen der Sensoren kompliziert den mechanischen Aufbau der Segmente erheblich.

Zumindest den mechanischen Aufbau des Linearmotorbasiertes Transportsystems zu vereinfachen ist daher die Aufgabe der Erfindung.

Die Aufgabe wird mit einem Läufer nach Anspruch 1 gelöst.

Die Aufgabe wird weiter mit einem Linearbasierten Transportsystem gemäß Anspruch 5 gelöst.

Die Aufgabe wird zudem mit einem Verfahren zum Betrieb eines Linearbasierten Transportsystem nach Anspruch 11 gelöst.

Die Aufgabe wird weiter durch eine Anlage gemäß Anspruch 14 gelöst.

Günstige Ausführungsformen und Weiterbildungen der Erfindung sind Gegenstand der abhängigen Ansprüche.

Der Läufer ist für ein Linearmotorbasiertes Transportsystem ausgebildet. Der Läufer weist ein erstes Erfassungselement und zumindest ein zweites Erfassungselement auf, wobei das jeweilige Erfassungselement zur Erfassung der Position des Läufers ausgebildet ist, wobei das erste Erfassungselement und zumindest das zweite Erfassungselement beabstandet mit dem Läufer verbunden sind.

Insbesondere beim Übergang des Läufers von einem ersten Segment auf ein zweites Segment sind das erste Erfassungselement von einem ersten Sensor des Linearmotorbasiertes Transportsystems erfassbar und/oder das zweite Erfassungselement von einem zweiten Sensor des Linearmotorbasiertes Transportsystems erfassbar.

Hierdurch müssen die Sensoren nicht mehr notwendig überlappen.

Der Läufer kann auch drei, vier oder mehr Erfassungselemente aufweisen, wobei die Erfassungselemente jeweils an einer Längsseite, insbesondere in einer vorgesehenen Bewegungsrichtung des Läufers, beabstandet angeordnet sind. Weiter kann ein Läufer die beabstandet angeordneten Erfassungselemente auf beiden, sich in der Bewegungsrichtung erstreckenden, Seiten angeordnet sein.

Das Linearmotorbasierte Transportsystem weist ein erstes Segment und zumindest ein zweites Segment sowie eine Antriebssteuerung auf, wobei die Segmente aufeinanderfolgend angeordnet sind, wobei dem jeweiligen Segment jeweils ein Sensor zugeordnet ist. Das Linearmotorbasierte Transportsystem weist darüber hinaus zumindest einen Läufer gemäß einem der vorangehenden Ansprüche auf, wobei die Antriebssteuerung zur Steuerung und/oder Regelung der Bewegung der Läufer ausgebildet ist.

Für das Verfahren zum Betrieb eines Linearmotorbasierten Transportsystems weist das Linearmotorbasierte Transportsystem ein erstes Segment und zumindest ein zweites Segment auf, wobei ein jeweiliger Läufer mit einem ersten Erfassungselement und zumindest einem zweiten Erfassungselement ausgestattet ist, wobei dem jeweiligen Segment jeweils ein Sensor zugeordnet ist,
- wobei der jeweilige Sensor zumindest eines der Erfassungselemente erfasst,
- wobei bei der Bewegung des Läufers auf dem jeweiligen Segment das erste Erfassungselement und das zweite Erfassungselement von dem Sensor des jeweiligen Segments erfasst werden,
- wobei bei einem Übergang des Läufers vom ersten Segment auf das zweite Segment das erste Erfassungselement vom Sensor des ersten Segments erfasst wird und das zweite Erfassungselement vom Sensor des zweiten Segments erfasst wird.

Bei der Bewegung des Läufers auf dem jeweiligen Segment werden das erste Erfassungselement und das zweite Erfassungselement von dem Sensor des jeweiligen Segments erfasst.

Beim Übergang des Läufers vom ersten Segment auf das zweite Segment wird das erste Erfassungselement vom Sensor des ersten Segments erfasst und das zweite Erfassungselement vom Sensor des zweiten Segments erfasst.

Vorteilhaft kann ein Läufer auch mehr als zwei Erfassungselemente aufweisen. Die Erfassungselemente sind dann zueinander beabstandet am Läufer angeordnet.

Bei dem hier betrachteten Linearmotorbasierten Transportsystem sind das jeweils erste Segment und das jeweils zweite Segment benachbart, insbesondere aufeinander folgend, angeordnet.

Das Erfassungselement ist vorzugsweise als Magnetelement, als Elektrode oder als Lichtquelle ausgebildet.

Der Sensor des jeweiligen Segments ist entsprechend des Erfassungselements beispielhaft als Magnetostriktionssensor, als Hall-Sensor, insbesondere als Array von Hall-Sensoren, als elektrischer Leiter, insbesondere als widerstandsbehafteter elektrischer Leiter, als Lichtsensor, insbesondere als Photodiode, ausgebildet.

Vorzugsweise ist das jeweilige Erfassungselement nahe einer Seitenwand des Läufers angeordnet.

Der Sensor ist vorzugsweise entsprechend der Position des Erfassungselements an dem Segment befestigt.

Der Sensor dient zur Erfassung der Position und/oder der Geschwindigkeit des jeweiligen Läufers.

Das Lineare Transportsystem dient zur Positionierung eines Läufers oder einer Mehrzahl von Läufer auf einer Bahn, wobei die Bahn vorzugsweise durch die Anordnung der Segmente definiert ist.

Bevorzugt sind die Erfassungselemente nahe derselben Seite des Läufers angeordnet. So kann auch der Sensor auf der jeweils selben Seite des jeweiligen Segments angeordnet sein.

Falls der Läufer sich auf einem Segment befindet, werden beide Erfassungselemente mit dem Sensor des jeweiligen Segmentes erfasst.

In der Regel sind die Läufer gleich ausgeführt. Insbesondere sind der Abstand zueinander und/oder die Position der Erfassungselemente an dem jeweiligen Läufer jeweils gleich. So können die Erfassungselemente einem jeweiligen Läufer zugeordnet werden.

Vorteilhaft ist der Abstand der Erfassungselemente ausreichend klein gewählt, so dass bei einem beabstandeten Verschieben einer Mehrzahl von Läufern mit gleichem Abstand die Erfassungselemente dem jeweiligen Läufer zuordnebar sind.

Die erfasste Position des jeweiligen Läufers wird an eine Antriebssteuerung übermittelt. Die Antriebssteuerung steuert und/oder regelt die Position und/oder die Geschwindigkeit des jeweiligen Läufers anhand der erfassten Position des jeweiligen Läufers.

Vorteilhaft kann eine Erfassung der Position oder der Geschwindigkeit des jeweiligen Läufers ohne Unterbrechungen erfolgen. So können Fehler bei der Bestimmung des Ortes oder der Geschwindigkeit behoben werden.

Falls sich der Läufer, insbesondere im mittleren Bereich, auf einem Segment befindet, erfasst der Sensor des Segments das erste Erfassungselement und das zweite Erfassungselement. Ein Übergang eines Läufers von einem ersten Segment auf ein weiteres Segment ist durch die Erfassung von jeweils nur einem des jeweiligen Erfassungselements durch den jeweiligen Sensor feststellbar.

In einer vorteilhaften Ausgestaltung des Läufers sind das erste Erfassungselement und das zweite Erfassungselement entlang einer Bewegungsrichtung des Läufers beabstandet.

Die Erfassungselemente können zwar versetzt angeordnet sein, sind aber vorzugsweise in der Bewegungsrichtung beabstandet am Läufer angeordnet.

Durch die beabstandete Anordnung kann der jeweilige Sensor des jeweiligen Segments vorteilhaft an jeweils einer Seite angebracht sein.

Bevorzugt sind jeweils zwei Erfassungselemente, insbesondere Permanentmagnete, nahe den jeweiligen Längsseiten des Läufers positioniert. Die Erfassungselemente sind in dieser Ausführung in der Längsrichtung des Läufers beabstandet.

Bei einer weiteren vorteilhaften Ausgestaltung des Läufers ist das jeweilige Erfassungselement jeweils als Magnetelement, als Elektrode oder als Leuchtmittel ausgebildet.

Je nach Typ des jeweiligen Sensors kann das Erfassungselement beispielhaft als Leuchtdiode (LED) oder als Permanentmagnet ausgebildet sein. Vorzugsweise kann bei der Verwendung einer Leuchtdiode der Sensor als Array aus Photosensoren (Phototransistoren, Photowiderstände oder Photodioden) ausgebildet sein, wobei die Position des jeweiligen Leuchtmittels mit Hilfe des Arrays ermittelt wird. Das Leuchtmittel ist bevorzugt am Läufer angeordnet. Weiter ist der Sensor an dem jeweiligen Läufer angeordnet.

Durch die Verwendung eines Permanentmagneten oder einer Leuchtdiode (LED) ist eine besonders kostengünstige Ausgestaltung des Läufers möglich. Bei der Verwendung eines Permanentmagneten ist darüber hinaus keine Spannungsversorgung auf dem Läufer notwendig.

Bei Verwendung einer Elektrode als Erfassungselement kann die Elektrode mit als Stromabnehmer ausgebildet sein. Vorteilhaft kann hierbei gleichzeitig elektrische Energie von Sensor auf das Erfassungselement und damit zum Läufer übertragen werden.

Zur Stromversorgung des Leuchtmittels kommt beispielhaft eine Batterie oder ein Akku in Betracht, der an/in dem Läufer angeordnet ist.

Bei einer vorteilhaften Ausgestaltung weisen das erste Erfassungselement und das zweite Erfassungselement eine unterschiedliche Wechselwirkungsstärke mit dem jeweiligen Sensor auf.

Obgleich bevorzugt zwei Erfassungselemente mit der gleichen Wechselwirkungsstärke und Wechselwirkungsart vorgesehen sind, sind unterschiedlich ausgeprägte Erfassungselemente vorteilhaft, falls die Ausrichtung des Läufers detektiert werden soll.

Zur Detektion der Ausrichtung ist es möglich, dass erste Erfassungselement als starken Permanentmagneten und das zweite Erfassungselement als schwachen Permanentmagneten auszubilden. Der Sensor erkennt dann, ob das erste Erfassungselement oder das zweite Erfassungselement in Bewegungsrichtung erfasst wird.

Durch eine unterschiedliche Stärke der Wechselwirkung der Erfassungselemente mit dem jeweiligen Sensor kann die Ausrichtung des Läufers vorzugsweise bestimmt werden.

Die Segmente sind vorzugsweise als Linearmotorstatoren ausgebildet. Die Segmente sind derart angeordnet, dass sich eine geradlinige Bewegungsmöglichkeit des Läufers auf eine Mehrzahl der Segmente erstreckt. Die Linearmotorstatoren bilden durch die aneinander gereihte Anordnung zumindest mechanisch eine, einem langen Linearmotorstator-entsprechende, Einheit. Vorteilhaft kann die Bewegung des jeweiligen Läufers auf der Mehrzahl von aufeinanderfolgenden Segmenten als eine Bewegung auf einem (lang ausgedehnten) Segment beschrieben werden.

Bevorzugt weist der Läufer Permanentmagnete auf, die mit stromdurchflossenen Spulen der Segmente wechselwirken. Durch ein zeitabhängiges Magnetfeld, welches von den Segmenten ausgeht, wird der Läufer auf dem Segment bewegt.

Der Stromfluss durch die Spulen des jeweiligen Segments wird von einer Antriebssteuerung bereitgestellt. Bevorzugt weist die Antriebssteuerung eine Bewegungssteuerung und/oder eine Speicherprogrammierbare Steuerung (SPS) sowie eine Mehrzahl von Stromrichtern auf. Vorteilhaft ist jedem Segment ein Stromrichter zugeordnet.

Die Antriebssteuerung umfasst eine Regelschleife zur Regelung der Bewegung des Läufers auf den Segmenten auf.

Die Sensoren dienen zur Erfassung der Position und/oder der Geschwindigkeit des jeweiligen Läufers. Die Sensoren sind jeweils einem Segment zugeordnet. Vorzugsweise ist der jeweilige Sensor an einer Längsseite des jeweiligen Segments angeordnet.

Vorteilhaft können die Sensoren, welche nicht überlappend angeordnet sind, jeweils auf der gleichen Seite des jeweiligen Segments angeordnet sein. Hierdurch kann der Läufer mit lediglich zwei Erfassungselementen auf einer Seite des Läufers ausgestattet sein.

Bei einer vorteilhaften Ausgestaltung weist des Linearmotorbasierten Transportsystems zumindest eine Sensorauswerteeinheit auf, wobei die jeweilige Sensorauswerteeinheit mit Hilfe des jeweiligen Sensors die Position von zumindest einem der Erfassungselemente ermittelt, wobei die jeweilige Sensorauswerteeinheit zur Bereitstellung der Position des jeweiligen Läufers aus der Position des jeweiligen Erfassungselements ausgebildet ist und wobei die jeweilige Sensorauswerteeinheit zur Bereitstellung der Position des jeweiligen Läufers an die Antriebssteuerung vorgesehen ist.

Bei der vorteilhaften Ausgestaltung des Linearmotorbasierten Transportsystems weist dieses eine Antriebssteuerung und/oder zumindest eine Sensorauswerteeinheit auf, wobei die Antriebssteuerung und/oder die jeweilige Sensorauswerteeinheit zur Erfassung der Position und/oder der Geschwindigkeit des jeweiligen Läufers ausgebildet sind.

Bevorzugt ist einem Sensor oder einer Gruppe von Sensoren jeweils eine Sensorauswerteeinheit zugeordnet.

Der Sensor des ersten Segments dient zur Erfassung der Geschwindigkeit und/oder der Position des jeweiligen Läufers auf dem ersten Segment.

Der Sensor des zweiten Segments dient zur Erfassung der Geschwindigkeit und/oder der Position des jeweiligen Läufers auf dem zweiten Segment.

Die Sensorauswerteeinheit kann auch in die Antriebssteuerung integriert sein.

Vorteilhaft ist die Sensorauswerteeinheit jeweils einem Umrichter zugeordnet. Bevorzugt wird überdies eine Sensorauswerteeinheit, die jeweils einem Sensor zugeordnet ist.

Vorteilhaft sind die Sensorauswerteeinheiten direkt über eine Netzwerkverbindung mit der Antriebsteuerung verbindbar oder verbunden. Als Netzwerkverbindung eignet sich z. B. PROFIBUS, oder besser Drive-CLiQ der Firma Siemens.

Vorteilhaft bildet die Sensorauswerteeinheit eine Schnittstelle zwischen den Sensoren und der Antriebssteuerung.

Somit können handelsübliche Komponenten für die Antriebssteuerung oder die Sensoren eingesetzt werden.

Bei einer besonders bevorzugten Ausgestaltung des Linearmotorbasiertes Transportsystems ist zur Erfassung der Position des jeweiligen Läufers ein virtuelles Erfassungselement vorgesehen, wobei das virtuelle Erfassungselement die Position des jeweiligen Läufers angibt, wobei zur Bestimmung der Position des virtuelle Erfassungselements die Sensorauswerteeinheit vorgesehen ist.

Bei der bevorzugten Ausgestaltung ordnet die Sensorauswerteeinheit dem jeweiligen Läufer ein virtuelles Erfassungselement zu. Das virtuelle Erfassungselement gibt die Position Ist-Position des jeweiligen Läufers an.

Die Position des virtuellen Erfassungselements ist vorzugsweise am räumlichen Mittelpunkt an der Seite des jeweiligen Läufers positioniert. Somit entspricht der Position des virtuellen Erfassungselements die Position des Läufers.

Das virtuelle Erfassungselement wird zur Vereinfachung der Positionserfassung durch die Sensorauswerteeinheit oder in der Antriebssteuerung erzeugt. Die Position des erzeugten virtuellen Erfassungselements wird der Antriebssteuerung, insbesondere einer Positions- und/oder Geschwindigkeitsregelung der Antriebssteuerung zur Verfügung gestellt.

Vorteilhaft wird das virtuelle Erfassungselement von der Sensorauswerteeinheit erzeugt, wenn das erste Erfassungselement des jeweiligen Läufers in den Erfassungsbereich des jeweiligen Sensors gelangt.

Die Sensorauswerteeinheit erzeugt das virtuelle Erfassungselement um ein Stück versetzt zu dem erfassten (realen) Erfassungselement. Nach der Erfassung des weiteren Erfassungselements erfolgt bevorzugt keine Änderung des virtuellen Erfassungselements.

Das virtuelle Erfassungselement wird bevorzugt dem Läufer dann zugewiesen, sobald der Läufer in den Einflussbereich des jeweiligen Sensors gelangt. Die Zuweisung des virtuellen Erfassungselements erfolgt vorzugsweise durch die Sensorauswerteeinheit.

Zur Zuordnung des virtuellen Erfassungselements dient vorzugsweise der eineindeutigen Zuordnung des jeweiligen Läufers auf eine Position.

Bei der Zuordnung des virtuellen Erfassungselements wird nach der Erfassung des Erfassungselements durch den jeweiligen Sensor die Position um eine Differenz verschoben. Die Position des virtuellen Erfassungselements entspricht der Position des (realen) Erfassungselements, welches um die Differenz verschoben worden ist.

Die Sensorauswerteeinheit erhält die Position des ersten Erfassungselements und addiert in diesem Fall die Differenz zu der Position und erhält die Position des virtuellen Erfassungselements. Die Position des virtuellen Erfassungselements wird an die Antriebssteuerung übertragen. Die Antriebssteuerung führt die Position des virtuellen Erfassungselements als Ist-Wert einer Positionsregelschleife oder einer Geschwindigkeitsregelschleife zu.

Bei der gleichzeitigen Erfassung von dem ersten Erfassungselement und dem zweiten Erfassungselement durch einen Sensor eines Segments kann die Sensorauswerteeinheit die Position in der räumlichen Mitte der beiden Erfassungselemente bestimmen. Die Sensorauswerteeinrichtung ordnet vorteilhaft bei gleichzeitiger Erfassung zweiter Erfassungselemente ein virtuelles Erfassungselement in der Mitte der beiden Erfassungselemente zu. Die Position des virtuellen Erfassungselements entspricht demnach der Position des jeweiligen Läufers.

In einer vorteilhaften Ausgestaltung des Linearmotorbasierten Transportsystems überlappt der jeweilige Sensor des jeweiligen Segments nicht mit einem zweiten Sensor des jeweiligen zweiten Segments.

Bei überlappenden Sensoren ist es nachteilig, dass die Sensoren jeweils abwechselnd an den unterschiedlichen Seiten des jeweiligen Segments angeordnet werden müssen, damit ein Überlappen der mechanisch starren Sensoren möglich ist. Nachteilig sind bei Anordnung der Sensoren an unterschiedlichen Seiten des jeweiligen Segments, dass auf beiden Seiten des jeweiligen Läufers je zumindest ein Erfassungselement anzuordnen ist.

Einige Sensoren können auf einer Seite des Segments in ihrer Höhe versetzt angeordnet sein. Dies ist jedoch nicht bei allen Sensoren der Fall.

Wenn die Sensoren in ihrer physikalischen Ausdehnung nicht überlappen, können die in einer Höhe jeweils auf der gleichen Seite des Segments angeordnet sein. So kann ein konstanter Abstand von dem jeweiligen Erfassungselement zum jeweiligen Sensor ermittelt werden. Durch das nicht-überlappen der Sensoren kann der o. g. Nachteil des Standes der Technik überwunden werden.

Bei einer weiteren vorteilhaften Ausgestaltung des Linearmotorbasierten Transportsystems ist beim Übergang des Läufers vom ersten Segment auf das zweite Segment der Sensor des ersten Segments zur Erfassung der Geschwindigkeit und/oder der Position des jeweiligen Läufers auf dem ersten Segment vorgesehen, wobei der Sensor des zweiten Segments zur Erfassung der Geschwindigkeit und/ oder der Position des jeweiligen Läufers auf dem zweiten Segment ausgebildet ist.

Ein Übergang des Läufers ist bevorzugt dadurch gekennzeichnet, dass der Läufer von dem ersten Segment bewegt wird und sich bereichsweise auf dem zweiten Segment befindet.

Der Übergang des Läufers vom ersten Segment auf das zweite Segment kann alternativ durch den Zeitbereich gekennzeichnet sein, in dem der Läufer zumindest beide Segmente teilweise überdeckt, oder im Einflussbereich des ersten und des zweiten Segmentes ist.

Beim Übergang des Läufers von dem ersten Segment auf ein zweites Segment werden zunächst beide Erfassungselemente vom Sensor des ersten Segments erfasst. Beim Übergang des Läufers verlässt ein Erfassungselement einen Erfassungsbereich desjenigen Sensors, der dem ersten Segment zugeordnet ist. Das Verlassen des Erfassungsbereichs des Sensors des ersten Segments kann den Sensor des zweiten Segments aktivieren.

Weiter tritt beim Übergang des Läufers eines der Erfassungselemente in den Erfassungsbereich des jeweiligen Sensors deszweiten Segments ein. Optional kann der Übergang des Läufers an die Antriebssteuerung gemeldet werden.

Nach dem Übergang des Läufers auf das zweite Segment werden wieder beide Erfassungselemente des jeweiligen Läufers von dem Sensor des zweiten Segmentes erfasst. Auch dies kann von der Antriebssteuerung registriert werden. Somit liegt in der Antriebssteuerung fortwährend die Information vor, ob zumindest ein Läufer sich auf einem jeweiligen Segment befindet.

Durch die vorstehenden Maßnahmen kann eine unterbrechungsfreie Erfassung der Geschwindigkeit und/oder eine unterbrechungsfreie Erfassung der Position des jeweiligen Läufers sichergestellt werden.

Bei einer weiteren vorteilhaften Ausgestaltung des Linearmotorbasiertes Transportsystems ist der jeweilige Sensor als Magnetostriktionssensor oder als Array von Hallsensoren und das jeweilige Erfassungselement als Magnetelement ausgebildet.

Magnetostriktionssensoren weisen vorzugsweise eine hohe Genauigkeit und eine einfache Auswertbarkeit ihrer Ausgangssignale auf. Arrays von Hallsensoren zeichnen sich vorzugsweise durch ihren günstigen Preis aus. Insbesondere Magnetelemente sind sehr preisgünstig. Somit lassen sich durch die hier vorgestellten Kombinationen einfache und kostengünstige Ausführungen eines Linearmotorbasiertes Transportsystems realisieren.

Einsatzgebiete des Linearmotorbasiertes Transportsystems sind Produktionsmaschinen, Verpackungsmaschinen oder Werkzeugmaschinen. Das Linearmotorbasierte Transportsystem dient im Rahmen der o. g. Maschinen zum Transport und/oder zur Positionierung des jeweils zu bearbeitenden Werkstücks oder des (zu verpackenden) Produktes.

Bei einer bevorzugten Ausgestaltung des Verfahrens wird aus der jeweiligen Position des jeweiligen Erfassungselements eines virtuellen Erfassungselements generiert, wobei die Position des virtuellen Erfassungselements die Position eines Läufers mit lediglich einem Erfassungselements entspricht, wobei die Position der virtuellen Erfassungseinheit der Antriebssteuerung bereitgestellt wird.

Hierbei wird davon ausgegangen, dass das einzelne Erfassungselements in der Mitte einer Seitenkante angeordnet sind und dass einzelne Erfassungselement durch das virtuelle Erfassungselement ersetzt ist.

Die Position des virtuellen Erfassungselements wird vorzugsweise in der Sensorauswerteeinheit berechnet. Durch die Berechnung der Position des virtuellen Erfassungselements wird das virtuelle Erfassungselement generiert.

Die Position des virtuellen Erfassungselements wird an die Antriebssteuerung übertragen. Die Antriebssteuerung stellt die Position des virtuellen Erfassungselements als Ist-Position des Läufers der Positions-Regelschleife oder einer Geschwindigkeitsregelschleife bereit.

In einer weiteren vorteilhaften Ausgestaltung wird die Position der virtuellen Erfassungseinheit auf einer Mittelposition zwischen der ersten Erfassungseinheit und der zweiten Erfassungseinheit generiert.

Die Generierung erfolgt vorteilhaft in der Sensorauswerteeinheit und/oder in der Antriebssteuerung. Die Generierung erfolgt durch die Addition der Differenz zur Position des ersten Erfassungselements oder einer Subtraktion der Differenz von der Position des zweiten Erfassungselements. Die Differenz entspricht hierbei insbesondere dem halben Abstand der gleichmäßig von der Mittelposition entfernten Erfassungselemente.

Im Folgenden wird die Erfindung anhand von Figuren näher beschrieben und erläutert. Die in den Figuren gezeigten Ausgestaltungen sind dabei nicht den Rahmen der Erfindung einschränkend zu verstehen. Die in den Figuren gezeigten Merkmale können auch einzeln zu neuen Ausführungsformen kombiniert werden. Es zeigen:
FIG 1 ein Linearmotorbasiertes Transportsystem nach derzeitigem Stand der Technik,
FIG 2 ein Linearmotorbasiertes Transportsystem,
FIG 3 den Übergang eines Läufers,
FIG 4 einen Linearmotorbasiertes Transportsystem sowie
FIG 5 einen Läufer.

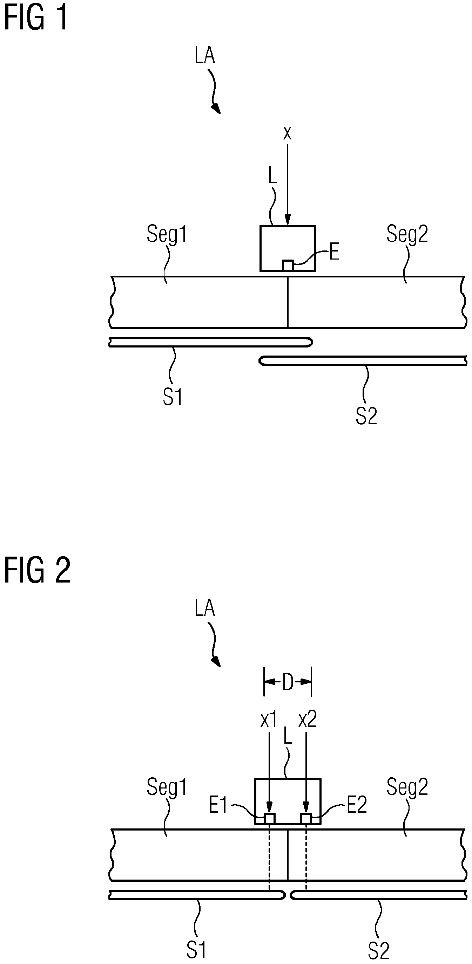

**FIG 1** zeigt ein Linearmotorbasiertes Transportsystem LA nach derzeitigem Stand der Technik. Das Linearmotorbasierte Transportsystem LA weist ein erstes Segment Seg1 und ein zweites Segment Seg2 auf, wobei das erste Segment Seg1 zum zweiten Segment Seg2 benachbart angeordnet ist. Dem ersten Segment Seg1 ist ein erster Sensor S1 und dem zweiten Segment Seg2 ist ein zweiter Sensor S2 zugeordnet. Auf den Segmenten Seg1, Seg2 wird ein Läufer L bewegt, wobei der Läufer L über ein Erfassungselement E verfügt. Die Sensoren S1, S2 der Segmente Seg1, Seg2 sind im Bereich des Übergangs zum ersten Segment Seg1 zum zweiten Segment Seg2 überlappend. In dem Bereich, in dem der Läufer L vom ersten Segment Seg1 zum zweiten Segment Seg2 übertritt, wird das Erfassungselement E von beiden Sensoren S1, S2 registriert. Der Läufer weist eine Position x auf, wobei die Position x der Position des Erfassungselements E entspricht. Nachteilig an der hier gezeigten Anordnung ist die Notwendigkeit der Überlappung der Sensoren S1, S2, welche den benachbarten Segmenten Seg1, Seg2 zugeordnet sind. Weiter nachteilhaft am Stand der Technik ist die aufwendige Erfassung der Position des Läufers in dem Übergangsbereich. Die Überlappung ist hier symbolisch dargestellt. In einem bereits bekannten Linearmotorbasierten Transportsystem LA sind die jeweiligen Sensoren S1, S2 auf zwei unterschiedlichen Seiten der Segmente abwechselnd angeordnet.

**FIG 2** zeigt ein Linearmotorbasiertes Transportsystem LA. Das Linearmotorbasierte Transportsystem LA weist ein erstes Segment Seg1 und, dazu benachbart angeordnet, ein zweites Segment Seg2 auf. Dem ersten Segment Seg1 ist ein erster Sensor S1 und dem zweiten Segment Seg2 ist ein zweiter Sensor S2 zugeordnet. Die Sensoren des ersten Segments Seg1 und des zweiten Segments Seg2 überlappen sich nicht. Es ist möglich, dass die Sensoren S1, S2 beabstandet angeordnet sind, d.h., dass der erste Sensor S1 nicht bis zum Ende des ersten Segments Seg1 reicht und der zweite Sensor S2 nicht am Anfang des zweiten Segments Seg2 beginnt. Um die Position x bzw. die Geschwindigkeit v des Läufers L festzustellen, weist der Läufer L ein erstes Erfassungselement E1 und ein zweites Erfassungselement E2 auf. Das erste Erfassungselement E1 ist an der Position x1 lokalisiert. Das zweite Erfassungselement E2 ist an der Position x2 positioniert. Zwischen den Positionen x1, x2 entspricht der Abstand einer Differenz D. Hier ist gezeigt, dass das erste Erfassungselement E1 vom ersten Sensor S1 erfasst wird und dass das zweite Erfassungselement E2 vom zweiten Sensor S2 erfasst wird. Die Erfassung wird durch die gestrichelten Pfeile gekennzeichnet.

Im Bereich des Übergangs des Läufers L vom ersten Segment Seg1 zum zweiten Segment Seg2, welcher hier gezeigt ist, wird das erste Erfassungselement vom ersten Sensor S1 erfasst und das zweite Erfassungselement E2 vom zweiten Sensor S2 erfasst. So ist beim Übergang vom ersten Segment Seg1 zum zweiten Segment Seg2 des Läufers L kein Überlappen der Sensoren S1, S2 mehr notwendig. Eine Zuordnung der Erfassungselemente E1, E2 zu den jeweilig erfassenden Sensoren S1, S2 ist gestrichelt angedeutet.

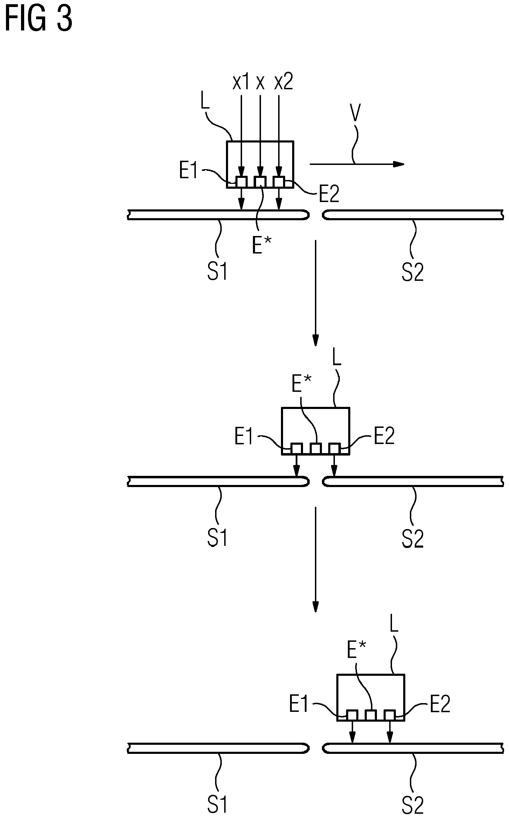

**FIG 3** zeigt den Übergang eines Läufers L. Der Übergang des Läufers L erfolgt vom ersten Segment Seg1 zum zweiten Segment Seg2. Im obersten Teil der FIG 3 wird die Position x und/oder die Geschwindigkeit v des Läufers L vom ersten Sensor S1 erfasst. Beide Erfassungselemente E1, E2 werden vom ersten Sensor S1 erfasst. Der zweite Sensor S2 registriert keines der Erfassungselemente E1, E2. Darunter ist ein Läufer L gezeigt, dessen Erfassungselemente E1, E2 von jeweils einem der beiden Sensoren S1, S2 erfasst werden. Hierbei wird das erste Erfassungselement E1 vom ersten Sensor S1 und das zweite Erfassungselement E2 vom zweiten Sensor S2 erfasst. In dem Übergangsbereich kann die Position x und/oder die Geschwindigkeit v des Läufers L durch jeweils einen Sensor S1 oder S2 oder durch beide Sensoren S1, S2 erfasst werden. Durch die Mehrzahl der Erfassungselemente E1, E2 kann die Position und/oder die Geschwindigkeit des Läufers L ohne Unterbrechung von den Sensoren S1, S2 festgestellt werden. Bewegt sich der Läufer L weiter auf das zweite Segment Seg2 werden beide Erfassungselemente E1, E2 vom zweiten Sensor S2 erfasst. Dieser Zustand wird im unteren Teil der FIG 3 gezeigt. Dem Läufer L ist jeweils ein virtuelles Erfassungselement E* zugeordnet. Das virtuelle Erfassungselement E* entspricht einem Erfassungselement, welches die Position x des Läufers darstellt. Die Position des virtuellen Erfassungselement E* kann auch als virtuelle Position x* bezeichnet werden.

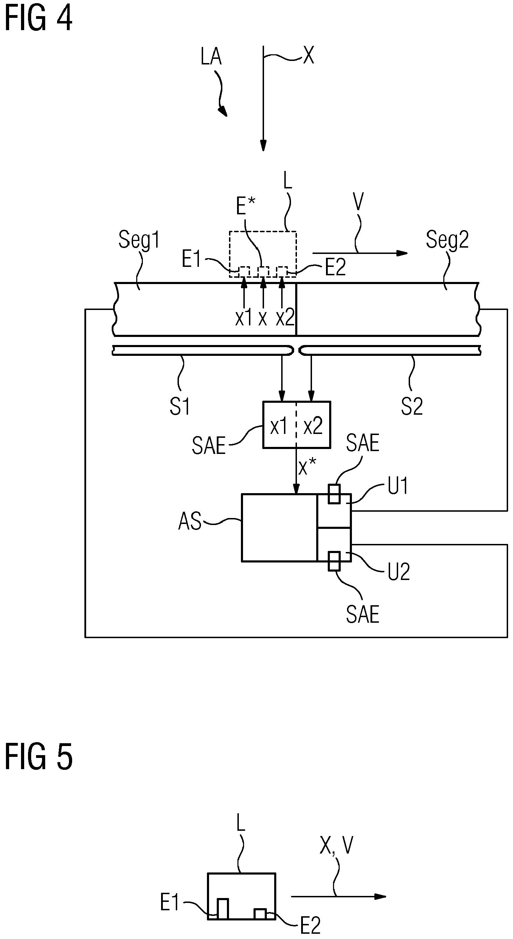

**FIG 4** zeigt ein Linearmotorbasiertes Transportsystem LA. Das Linearmotorbasierte Transportsystem LA weist analog zur FIG 2 zwei benachbart angeordnete Segmente Seg1, Seg2 auf. Auf den Segmenten Seg1, Seg2 kann ein Läufer L bewegt werden, wobei der Läufer L ein erstes Erfassungselement E1 und ein zweites Erfassungselement E2 aufweist. Der Läufer L ist gestrichelt gezeichnet, da der Läufer L nicht zur Funktion der hier gezeigten Ausführung notwendig ist. Den Segmenten Seg1, Seg2 ist jeweils ein erster Sensor S1 bzw. ein zweiter Sensor S2 zugeordnet. Die Sensoren S1, S2 sind jeweils mit einer Antriebssteuerung AS verbunden. Die Antriebssteuerung AS weist vorzugsweisen einen oder mehrere Stromrichter U1, U2 auf. Vorzugsweise dient der jeweilige Stromrichter U1, U2 zur Stromversorgung jeweils eines Segments Seg1, Seg2. Die Antriebssteuerung AS steuert oder regelt mit Hilfe der Umrichter U1, U2 die Bestromung der Segmente Seg1, Seg2.

Zwischen den Sensoren S1, S2 und der Erfassungseinheit ist die Sensorauswerteeinheit SAE für den ersten Sensor S1 und für den zweiten Sensor S1 dargestellt. Alternativ kann auch eine erste Sensorauswerteeinheit SAE für den ersten Sensor S1 und eine zweite Sensorauswerteeinheit SAE für den zweiten Sensor S2 vorgesehen sein. Die jeweilige Sensorauswerteeinheit SAE kann auch dem jeweiligen Umrichter U zugeordnet sein. Die Sensorauswerteeinheit SAE berechnet aus der Position x1 des ersten Erfassungselements E1 und/oder der Position x2 des zweiten Erfassungselements x2 die Position x des virtuellen Erfassungselements E*.

Möglich ist jedoch auch für jeweils einen Sensor S1, S2 jeweils eine Sensorauswerteeinheit SAE zugeordnet. Die jeweilige Sensorauswerteeinheit SAE kann auch zur Auswertung einer Mehrzahl (zwei, drei vier,...) Sensoren S1, S2 ausgebildet sein.

Eine Berechnung der Position x des virtuellen Erfassungselements E* ist auch durch die Erfassung der Position eins Erfassungselements E1, E2 möglich. Hierbei wird die Position x1, x2 des jeweiligen Erfassungselements E1, E2 lediglich die halbe Differenz D addiert bzw. subtrahiert.

Die Position x des virtuellen Erfassungselements E* wird als Position des Läufers L an die Antriebssteuerung AS und/oder an die Stromrichter U1, U2 übertragen. Der Position x des virtuellen Erfassungselements E* wird die Position des jeweiligen Läufers L zugeordnet.

Falls die Position x und/oder die Geschwindigkeit v des Läufers L geregelt wird, dient die Position x des Läufers L, welche durch die Sensoren S1, S2 erfasst wird, als Eingang für die Regelschleife der Antriebssteuerung AS.

Vorteilhaft findet die Regelung der Position x und/oder der Geschwindigkeit v des Läufers L in einem Umrichter U statt. So können Signalwege verkürzt werden.

**FIG 5** zeigt einen Läufer L. Der Läufer L dient vorzugsweise zur Bewegung auf einem Segment Seg1, Seg2. Der Läufer L weist ein erstes Erfassungselement E1 und in der Bewegungsrichtung beabstandet, ein zweites Erfassungselement E2 auf. Das erste Erfassungselement E1 kann von dem zweiten Erfassungselement E2 verschieden sein. Die mögliche Verschiedenheit wird durch die unterschiedliche Größe der Erfassungselemente E1, E2 symbolisiert.

Zusammenfassend betrifft die Erfindung einen Läufer L für ein Linearmotorbasiertes Transportsystem LA, ein Verfahren zum Betrieb eines solches Linearmotorbasiertes Transportsystem LA und ein solches Linearmotorbasiertes Transportsystem LA selbst. Gemäß einem Aspekt der Erfindung weist der Läufer L ein erstes Erfassungselement E1 und zumindest ein zweites Erfassungselement E2 auf, wobei das jeweilige Erfassungselement E1, E2 zur Erfassung der Position des Läufers L ausgebildet ist, wobei das erste Erfassungselement E1 und das zweite Erfassungselement E2 beabstandet mit dem Läufer L verbunden sind und wobei das erste Erfassungselement E1 von einem ersten Sensor S1 des Linearmotorbasiertes Transportsystems LA erfassbar ist und/oder das zweite Erfassungselement E2 von einem zweiten Sensor S2 des Linearmotorbasiertes Transportsystems LA erfassbar ist. Durch den Einsatz eines solchen Läufers L in einem Linearmotorbasiertes Transportsystem LA entfällt vorzugsweise eine bisher notwendige Überlappung von Sensoren S1, S2.

## Patentansprüche

1. Läufer (L) für einen Linearmotorbasiertes Transportsystem (LA), aufweisend ein erstes Erfassungselement (E1) und zumindest ein zweites Erfassungselement (E2), wobei das jeweilige Erfassungselement (E1, E2) zur Erfassung der Position (x) des Läufers (L) ausgebildet ist, wobei das erste Erfassungselement (E1) und zumindest das zweite Erfassungselement (E2) beabstandet mit dem Läufer (L) verbunden sind.

2. Läufer (L) nach Anspruch 1, wobei das erste Erfassungselement (E1) und das zweite Erfassungselement (E2) entlang einer Bewegungsrichtung des Läufers (L) beabstandet sind.

3. Läufer (L) nach Anspruch 1 oder 2, wobei das jeweilige Erfassungselement (E1, E2) jeweils als Magnetelement, als Elektrode oder als Leuchtmittel ausgebildet ist.

4. Läufer (L) nach einem der vorangehenden Ansprüche, wobei das erste Erfassungselement (E1) und das zweite Erfassungselement (E2) eine unterschiedliche Wechselwirkungsstärke mit dem jeweiligen Sensor (S1, S2) aufweist.

5. Linearmotorbasiertes Transportsystem (LA), aufweisend ein erstes Segment (Seg1) und zumindest ein zweites Segment (Seg2) sowie eine Antriebssteuerung (AS), wobei die Segmente (Seg1, Seg2) aufeinanderfolgend angeordnet sind, wobei dem jeweiligen Segment (Seg1, Seg2) jeweils ein Sensor (S1, S2) zugeordnet ist weiter aufweisend zumindest einen Läufer (L) gemäß einem der vorangehenden Ansprüche und wobei die Antriebssteuerung (AS) zur Steuerung und/oder Regelung der Bewegung der Läufer (L) ausgebildet ist.

6. Linearmotorbasiertes Transportsystem nach Anspruch 5, weiter aufweisend zumindest eine Sensorauswerteeinheit (SAE), wobei die jeweilige Sensorauswerteeinheit (SAE) mit Hilfe des jeweiligen Sensors (S1, S2) die Position (x1, x2) von zumindest einem der Erfassungselemente (E1, E2) ermittelt, wobei die zumindest eine Sensorauswerteeinheit (SAE) zur Bereitstellung der Position (x*) des Läufers (L) aus der Position des jeweiligen Erfassungselements (E1, E2) ausgebildet ist und wobei die jeweilige Sensorauswerteeinheit (SAE) zur Bereitstellung der jeweiligen Position des Läufers (x) an die die Antriebssteuerung (AS) vorgesehen ist.

7. Linearmotorbasiertes Transportsystem (LA) nach Anspruch 5 oder 6, wobei zur Erfassung der Position (x) des jeweiligen Läufers (L) ein virtuelles Erfassungselement (E*) vorgesehen ist, wobei das virtuelle Erfassungselement (E*) die Position (x) des jeweiligen Läufers (L) angibt, wobei zur Bestimmung der Position (x) des virtuelle Erfassungselements (E*) eine Sensorauswerteeinheit (SAE) vorgesehen ist.

8. Linearmotorbasiertes Transportsystem nach einem der Ansprüche 5 bis 7, wobei der jeweilige Sensor (S) des jeweiligen ersten Segments (Seg1, Seg2) nicht mit einem weiteren Sensor (S) eines jeweils zweiten Segments (Seg1, Seg2) überlappt.

9. Linearmotorbasiertes Transportsystem (LA) nach einem der Ansprüche 5 bis 8, wobei beim Übergang des Läufers (L) vom ersten Segment (Seg1) auf das zweite Segment (Seg2) der Sensor (S1) des ersten Segments (Seg1) zur Erfassung der Geschwindigkeit (v) und/oder der Position (x) des jeweiligen Läufers (L) auf dem ersten Segment (Seg1) vorgesehen ist und wobei der Sensor (S2) des zweiten Segments (Seg2) zur Erfassung der Geschwindigkeit (v) und/ oder der Position (v) des jeweiligen Läufers (L) auf dem zweiten Segment (Seg2) ausgebildet ist.

10. Linearmotorbasiertes Transportsystem (LA) nach einem der Ansprüche 5 bis 9, wobei der jeweilige Sensor (S1, S2) als Magnetostriktionssensor oder als Array von Hallsensoren ausgebildet ist und das jeweilige Erfassungselement (E1, E2) als Magnetelement ausgebildet ist.

11. Verfahren zum Betrieb eines Linearmotorbasiertes Transportsystems (LA), wobei der Linearmotorbasiertes Transportsystem (LA) ein erstes Segment (Seg1) und zumindest ein zweites Segment (Seg2) aufweist, wobei ein jeweiliger Läufer (L) mit einem ersten Erfassungselement (E1) und zumindest einem zweiten Erfassungselement (E2) ausgestattet ist, wobei dem jeweiligen Segment (Seg1, Seg2) jeweils ein Sensor (S1, S2) zugeordnet ist,
- wobei der jeweilige Sensor (S1, S2) zumindest eines der Erfassungselemente (E1, E2) erfasst,
- wobei bei der Bewegung des Läufers (L) auf dem jeweiligen Segment (Seg1, Seg2) das erste Erfassungselement (E1) und das zweite Erfassungselement (E2) von dem Sensor (S1, S2) des jeweiligen Segments (Seg1, Seg2) erfasst wird,
- wobei bei einem Übergang des Läufers (L) vom ersten Segment (Seg1) auf das zweite Segment (Seg2) das erste Erfassungselement (E1) vom Sensor (S1) des ersten Segments (Seg1) erfasst wird und das zweite Erfassungselement (E2) vom Sensor (S2) des zweiten Segment (Seg2) erfasst wird.

12. Verfahren nach Anspruch 11, wobei aus der jeweiligen Position (x1, x2) des jeweiligen Erfassungselements (E1, E2) eine Position (x) eines virtuellen Erfassungselements (E*) generiert wird, wobei die Position des virtuellen Erfassungselements (E*) die Position eines Läufers (L) mit lediglich einem Erfassungselements (E1, E2) entspricht, wobei die Position des virtuellen Erfassungseinheit (E*) der Antriebssteuerung (AS) bereitgestellt wird.

13. Verfahren nach Anspruch 12, wobei die Position der virtuellen Erfassungseinheit (E*) auf einer Mittelposition zwischen der ersten Erfassungseinheit (E1) und der zweiten Erfassungseinheit (E2) generiert wird.

14. Anlage, insbesondere Produktionsmaschine, Verpackungsmaschine oder Werkzeugmaschine, aufweisend einen Linearmotorbasiertes Transportsystem nach einem der Ansprüche 5 bis 10.
